(19) Europäisches Patentamt
European Patent Office
Office européen des brevets

(11) **EP 4 553 543 A1**

(12) **EUROPEAN PATENT APPLICATION**

(43) Date of publication:
**14.05.2025 Bulletin 2025/20**

(21) Application number: **24209059.5**

(22) Date of filing: **25.10.2024**

(51) International Patent Classification (IPC):
**G01S 19/25** (2010.01)

(52) Cooperative Patent Classification (CPC):
**H04L 25/0222; H04B 17/30;** H04J 13/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.11.2023 US 202318387726**

(71) Applicant: **Rockwell Collins, Inc.
Cedar Rapids, IA 52498 (US)**

(72) Inventor: **MURPHY, Ryan M.
Marion (US)**

(74) Representative: **Dehns
10 Old Bailey
London EC4M 7NG (GB)**

(54) **A SYSTEM AND METHOD FOR SEGMENTED FREQUENCY DOMAIN CORRELATION WITH DOPPLER BINNING**

(57) A communication system in a mobile platform receives a signal and applies a plurality of Doppler offsets within a range of potential Doppler offsets. Spectral analysis is performed for correlators in each of the Doppler offset signals, and a signal with a best correlation score is used to identify the actual Doppler offset of the signal. The signal is padded by some predetermined length and correlators are segmented. A polynomial interpolator (122; 124) corrects the sample rate for each one of the Doppler offsets signals.

FIG.1

**Description**

BACKGROUND

With resilient waveforms (low probability of intercept / low probability of detection), the waveforms include very long correlation sequences to enable acquisition. In dynamic (fast moving) systems, Doppler shift alters the carrier waveform; if it is shifted too far in frequency, the signal, from the start of the correlator, may rotate on the complex plane and phase. If the signal rotates far enough, the signal won't correlate anymore, and the correlator will not work.

Resilient waveforms with long correlation sequences require substantial processing resources for waveform acquisition. Platform dynamics magnify this issue requiring an architecture that can handle large amounts of Doppler and sample rate uncertainty.

It would be advantageous to have a system and method for managing Doppler shift when decoding resilient waveforms.

SUMMARY

According to an aspect, embodiments of the inventive concepts disclosed herein are directed to a computer apparatus or communication system in a mobile platform. The apparatus or system receives a signal and applies a plurality of Doppler offsets within a range of potential Doppler offsets. Spectral analysis is performed for correlators in each of the Doppler offset signals, and a signal with a best correlation score is used to identify the actual Doppler offset of the signal.

In a further aspect, the signal is padded by some predetermined length and correlators are segmented.

In a further aspect, a polynomial interpolator corrects the sample rate for each one of the Doppler offsets signals.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

BRIEF DESCRIPTION OF THE DRAWINGS

The numerous advantages of the embodiments of the inventive concepts disclosed herein may be better understood by those skilled in the art by reference to the accompanying figures in which:

FIG. 1 shows a block diagram of a system according to an exemplary embodiment;
FIG. 2 shows a flowchart of a method according to an exemplary embodiment;

DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

**As** used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to a communication system in a mobile platform. The system receives a signal and applies a plurality of Doppler offsets within a range of potential Doppler offsets. Spectral analysis is performed for correlators in each of the Doppler offset signals, and a signal with a best correlation score is used to identify the actual Doppler offset of the signal. The signal is padded by some predetermined length and correlators are segmented. A polynomial interpolator corrects the sample rate for each one of the Doppler offsets signals.

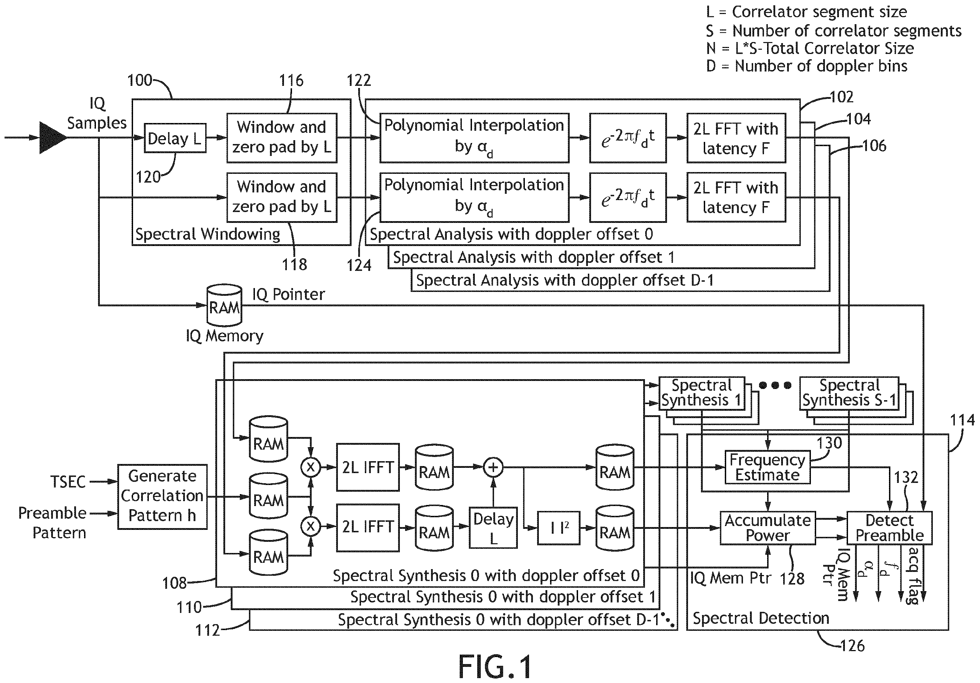

Referring to FIG. 1, a block diagram of a system according to an exemplary embodiment is shown. Communication systems operate on the principle of fast-convolution where correlation by convolution in the time-domain is equivalent to correlation by multiplication in the frequency-domain. Because fast-convolution utilizes a discrete-time Fourier transform, multiplication in the frequency-domain results in circular, not linear convolution. To address this, a frequency-domain correlator defines a spectral windowing element 100. The spectral windowing element 100 receives an input signal and expands the input signal via a windowing and padding element 118 with some number L of zero samples. Such expansion guarantees that linear correlation is achieved by spectral synthesis blocks 108, 110, 112. In at least one embodiment, signal expansion results in dead periods in correlation coverage; therefore, a second windowing and padding element 116 with a delay element 120 of L samples is utilized to provide 100% correlation coverage. In at least one embodiment, the delay element 120 may impose a 50% delay.

Mobile platform velocity often causes high Doppler frequency offset. To account for such Doppler frequency offset, the system reduces long correlation sequences of size $N$ into $S$ smaller coherent correlation segments of size $L$ samples. The length of each segment is chosen such that:

$$dop_{seg} = \pm {F_s}/{2L}$$

where $F_s$ is the receiver sample rate. Such segment size results in a maximum phase change of $\pm\pi$ radians across a given segment.

In at least one embodiment, due to non-coherent combining loss across $S$ segments, the length of an individual segment may not be made arbitrarily small to cover an entire Doppler uncertainty range. Therefore, the system instantiates a plurality of spectral analysis modules 102, 104, 106, each defining a Doppler bin. With Doppler binning, samples flowing into the spectral analysis modules 102, 104, 106 are mixed at multiples of $f_d = \pm d * dop_{seg}$ where $d$ is a Doppler bin index. The plurality of spectral analysis modules 102, 104, 106 result in a corresponding number of possible Doppler frequency offsets.

Mobile platform velocity not only creates an offset in frequency but also compresses or expands the received samples based on the direction of movement. Such compression or expansion results in a sample rate change for each one of the Doppler bins. The spectral analysis modules 102, 104, 106 may utilize a polyphase interpolator 122, 124 to correct the sample rate for each one of the Doppler bin offsets. After the sample rate and frequency correction, the spectral analysis modules 102, 104, 106 convert the modified time-domain samples to the frequency-domain, resulting in two matrices of $D$ by $2L$ complex fast Fourier transform outputs; one for each frame produced by the spectral windowing element 100 (current and delayed).

In at least one embodiment, spectral synthesis modules 108, 110, 112 operate on the two spectral analysis matrices, performing a frequency-domain correlation and conversion to the time-domain for each one of the $S$ possible segments. The output of the spectral synthesis modules 108, 110, 112 is two $D$ by $S$ by $2L$ matrices: one containing time-domain IQ samples and the other the correlation power estimate across $D$ doppler bins within $S$ segments. The results are passed on to spectral detection module 126 with a power accumulator 128 that non-coherently accumulates the correlation power across all S segments.

In at least one embodiment, a frequency estimate module 130 simultaneously finds the average phase difference between adjacent correlator segments and converts the result into a Doppler frequency estimate. These two operations are performed for each one of the $D$ possible doppler bins and passed onto a detect preamble module 132 for signal detection. The detect preamble module 132 searches correlation scores to identify a correlation score that exceeds a predetermined threshold for each one of the $D$ possible doppler bins. Once a correlation score is identified, the detect preamble module 132 interpolates across adjacent Doppler bins to determine an overall coarse Doppler frequency estimate.

In at least one embodiment, time-domain IQ samples are simultaneously stored in a band-storage memory and a pointer location is passed to the detect preamble module 132. After signal detection, the detect preamble module 132 accounts for the latency in correlation and returns an index to the location of first time-domain IQ sample after the end of preamble pattern.

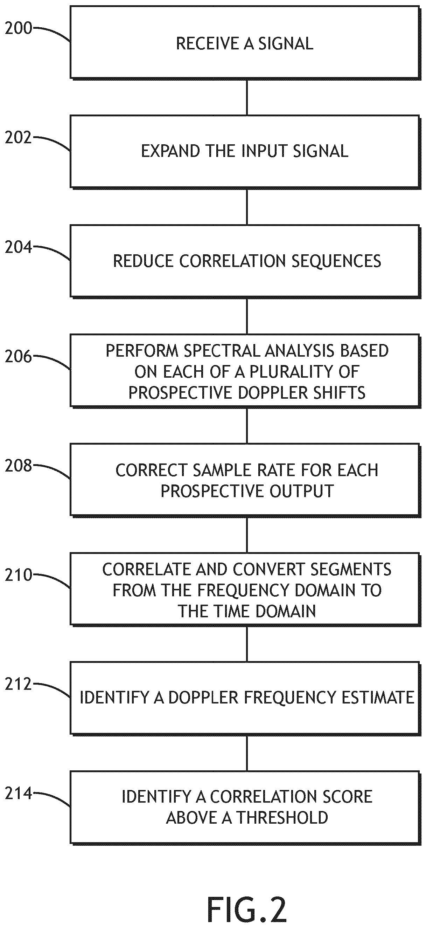

Referring to FIG. 2, a flowchart of a method according to an exemplary embodiment is shown. A communication system receives 200 a signal including a correlator component. The system expands 202 the signal with zero padding, and potentially in a separate stream with some predefined delay.

In at least one embodiment, the system segments 204 the correlator. The correlator is divided into segments of some predetermine size *L*, where each segment of size L is sized to handle a maximum amount of expected Doppler frequency shift and Doppler sample rate expansion / compression.

In at least one embodiment, the system performs 206 spectral analysis, converting the signal into the frequency domain. Each segment corresponds to a specific, discrete Doppler offset, correlated to a different Doppler bin. The system identifies 214 a Doppler offset correlator will correlate against the core layer.

For example, the system may define a maximum Doppler offset such as ± 100 kHz. One segment would be analyzed with discrete Doppler offsets within the maximum Doppler offset, and then the system would identify which Doppler offset segment maximized the correlation.

In at least one embodiment, a polynomial interpolator may correct 208 sample rates for each sample. The polynomial interpolator checks all the expansion and compressions that can possibly happen or all the Doppler frequency mixes forward and backward.

In at least one embodiment, after correlation, signals may be converted 210 from the frequency domain to the time domain, and a Doppler frequency estimate is identified 212.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The forms herein before described being merely explanatory embodiments thereof, it is the intention of the following claims to encompass and include such changes. Furthermore, any of the features disclosed in relation to any of the individual embodiments may be incorporated into any other embodiment.

**Claims**

1. A computer apparatus or communication system in a mobile platform comprising:

   at least one antenna; and
   at least one processor in data communication with a memory storing processor executable code for configuring the at least one processor to:

   receive a signal via the at least one antenna;
   apply a plurality of Doppler offsets to the signal;
   associate each Doppler offset signal with a Doppler bin; and
   perform spectral analysis on each Doppler offset signal to identify at least one Doppler offset resulting in a highest correlator score.

2. The computer apparatus or communication system of Claim 1, wherein the at least one processor is further configured to pad a correlator of each Doppler offset signal by a predefined amount.

3. The computer apparatus or communication system of Claim 2, wherein the at least one processor is further configured to:

   replicate each Doppler offset signal;
   pad a correlator of each replicated Doppler offset signal by a predefined amount; and
   apply a delay to each padded, replicated Doppler offset signal.

4. The computer apparatus or communication system of Claim 3, wherein the at least one processor is further configured to segment each correlator of each Doppler offset signal, each segment being defined by a sample rate and a number of samples.

5. The computer apparatus or communication system of Claim 3 or 4, wherein the at least one processor is further configured to:

   convert time-domain samples to frequency-domain samples; and
   produce a matrix of complex fast Fourier transform outputs for each padded,
   Doppler offset signal and padded, replicated Doppler offset signal.

6. The computer apparatus or communication system of any preceding claim, wherein the at least one processor is further configured to apply polynomial interpolation to each Doppler offset signal to correct a sample rate.

7. The computer apparatus or communication system of any preceding claim, wherein the at least one processor is further configured to segment each correlator of each Doppler offset signal.

8. A method comprising:

   receiving a signal;
   applying a plurality of Doppler offsets to the signal;
   associating each Doppler offset signal with a Doppler bin; and
   performing spectral analysis on each Doppler offset signal to identify at least one Doppler offset resulting in a highest correlator score.

**9.** The method of Claim 8, further comprising padding a correlator of each Doppler offset signal by a predefined amount.

**10.** The method of Claim 9, further comprising:

replicating each Doppler offset signal;
padding a correlator of each replicated Doppler offset signal by a predefined amount; and
applying a delay to each padded, replicated Doppler offset signal.

**11.** The method of Claim 10, further comprising segmenting each correlator of each Doppler offset signal, each segment being defined by a sample rate and a number of samples.

**12.** The method of Claim 10 or 11, further comprising:

converting time-domain samples to frequency-domain samples; and
producing a matrix of complex fast Fourier transform outputs for each padded, Doppler offset signal and padded, replicated Doppler offset signal.

**13.** The method of any of Claims 8 to 12, further comprising applying polynomial interpolation to each Doppler offset signal to correct a sample rate.

L = Correlator segment size
S = Number of correlator segments
N = L*S-Total Correlator Size
D = Number of doppler bins

IQ Samples

Delay L — 120

Window and zero pad by L — 116
Window and zero pad by L — 118

Spectral Windowing

IQ Pointer

RAM
IQ Memory

Polynomial Interpolation by $\alpha_d$ — 122
Polynomial Interpolation by $\alpha_d$

$e^{-2\pi f_d t}$
$e^{-2\pi f_d t}$

2L FFT with latency F — 102, 104, 106
2L FFT with latency F

Spectral Analysis with doppler offset 0
Spectral Analysis with doppler offset 1 — 124
Spectral Analysis with doppler offset D-1

Generate Correlation Pattern h

TSEC
Preamble Pattern

RAM  RAM  RAM

$\times$  $\times$

2L IFFT  2L IFFT

RAM  RAM

$+$  Delay L

$| \ |^2$

RAM  RAM

Spectral Synthesis 0 with doppler offset 0 — 108
Spectral Synthesis 0 with doppler offset 1 — 110
Spectral Synthesis 0 with doppler offset D-1 — 112

Spectral Synthesis 1
Spectral Synthesis S-1

Frequency Estimate — 130
Accumulate Power — 128

Detect Preamble — 114, 132

acq flag
$f_d$
$\alpha_d$
IQ Mem Ptr

IQ Mem Ptr

Spectral Detection — 126

FIG.1

100  116  118

200 — RECEIVE A SIGNAL

202 — EXPAND THE INPUT SIGNAL

204 — REDUCE CORRELATION SEQUENCES

206 — PERFORM SPECTRAL ANALYSIS BASED ON EACH OF A PLURALITY OF PROSPECTIVE DOPPLER SHIFTS

208 — CORRECT SAMPLE RATE FOR EACH PROSPECTIVE OUTPUT

210 — CORRELATE AND CONVERT SEGMENTS FROM THE FREQUENCY DOMAIN TO THE TIME DOMAIN

212 — IDENTIFY A DOPPLER FREQUENCY ESTIMATE

214 — IDENTIFY A CORRELATION SCORE ABOVE A THRESHOLD

FIG.2

## EUROPEAN SEARCH REPORT

**Application Number**

EP 24 20 9059

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/204981 A1 (KONG SEUNG-HYUN [KR]) 23 July 2015 (2015-07-23) * paragraph [0007] - paragraph [0011] * * figure 1 * * paragraph [0035] - paragraph [0040] * | 1-13 | INV. G01S19/25 |
| A | AKOPIAN D ET AL: "A Fast Time-Recursive Correlator for DSSS Communications", IEEE SIGNAL PROCESSING LETTERS, IEEE, USA, vol. 15, 1 January 2008 (2008-01-01), pages 589-592, XP011235984, ISSN: 1070-9908 * page 591, right-hand column * * page 589 * | 1-5,7,9, 10,12 | |
| A | Ifeachor Emmanuel ET AL: "Digital Signal Processing", , 1 January 2002 (2002-01-01), pages 297-297, XP093256329, USA Retrieved from the Internet: URL:https://www.google.de/books/edition/Di gital_Signal_Processing/slHJIO9xmcEC?hl=en &gbpv=0 * page 297 * | 2,3,5,9, 10,12 | TECHNICAL FIELDS SEARCHED (IPC)  G01S |
| A | Sen Maw Kuo: "Real-time Digital Signal Procesing", , 1 January 2001 (2001-01-01), pages 330-330, XP093256339, USA Retrieved from the Internet: URL:https://www.google.de/books/edition/Re al_time_Digital_Signal_Processing/70scPIwK 7cUC?hl=en&gbpv=0 * page 330 * | 2,3,5,9, 10,12 | |

-/--

The present search report has been drawn up for all claims

| Place of search | Date of completion of the search | Examiner |
|---|---|---|
| Berlin | 12 March 2025 | Douglas, Ian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 24 20 9059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Honghao Gao ET AL: "Communications and Networking", , 1 January 2020 (2020-01-01), pages 672-673, XP093256352, Switzerland Retrieved from the Internet: URL:https://www.google.de/books/edition/Co mmunications_and_Networking/8iLTDwAAQBAJ?h l=en&gbpv=0 ----- | 2,3,5,9, 10,12 | |
| A | US 2016/116599 A1 (TURNER MICHAEL [GB] ET AL) 28 April 2016 (2016-04-28) * paragraph [0010] * ----- | 4,7,11 | |
| A | US 2020/150256 A1 (DENT PAUL W [US] ET AL) 14 May 2020 (2020-05-14) * paragraph [0188] * ----- | 6,13 | |

TECHNICAL FIELDS
SEARCHED (IPC)

The present search report has been drawn up for all claims

| Place of search | Date of completion of the search | Examiner |
|---|---|---|
| Berlin | 12 March 2025 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9059

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2025

| Patent document cited in search report | Publication date | Patent family member(s) | | Publication date |
|---|---|---|---|---|
| US 2015204981 A1 | 23-07-2015 | KR | 20150086760 A | 29-07-2015 |
| | | US | 2015204981 A1 | 23-07-2015 |
| US 2016116599 A1 | 28-04-2016 | CA | 2915313 A1 | 11-12-2014 |
| | | EP | 2811320 A1 | 10-12-2014 |
| | | EP | 3004928 A1 | 13-04-2016 |
| | | ES | 2828638 T3 | 27-05-2021 |
| | | JP | 6447883 B2 | 09-01-2019 |
| | | JP | 2016524710 A | 18-08-2016 |
| | | US | 2016116599 A1 | 28-04-2016 |
| | | WO | 2014195712 A1 | 11-12-2014 |
| US 2020150256 A1 | 14-05-2020 | US | 2020150256 A1 | 14-05-2020 |
| | | US | 2023051731 A1 | 16-02-2023 |

EPO FORM P0459

For more details about this annex : see Official Journal of the European Patent Office, No. 12/82